# EUROPEAN PATENT APPLICATION

(11) **EP 0 717 919 A1**
(43) Date of publication of application: **26.06.1996**
(21) Application number: 95203576.4
(22) Date of filing: 20.12.1995
(51) Int. Cl.: A01B 49/02

(54) **A soil cultivating machine**

(30) Priority: 23.12.1994 NL 9402194
(71) Applicant: MAASLAND N.V., NL-3155 PD Maasland (NL)
(72) Inventor: Bom, Cornelis J. G., NL-3181 VC Rozenburg (NL)
(74) Representative: Mulder, Herman

(57) **Abstract**

The invention relates to a soil cultivating machine for the preparation of a seedbed, provided with soil cultivating members (4) and an after-treatment member (8, 9), such as a levelling bar (8), a roller (9) or a combination thereof, arranged therebehind in the direction of travel A, which after-treatment member (8, 9) consists of at least two parts that, seen transversely to the direction of travel A, are arranged at some distance from each other, and which machine comprises a soil displacing member (7) which, during operation, is active in the soil part of the space between the imaginary vertical planes orientated vertically in the direction of travel A and being adjacent to the facing lateral ends of the after-treatment members (8, 9).

## Description

The present invention relates to a soil cultivating machine for the preparation of a seedbed, provided with soil cultivating members and an after-treatment member, such as a levelling bar, a roller or a combination thereof, arranged therebehind in the direction of travel A, which after-treatment member (8, 9) consists of at least two parts that, seen transversely to the direction of travel A, are arranged at some distance from each other, and which machine comprises a soil displacing member which, during operation, is active in the soil part of the space between the imaginary vertical planes orientated vertically in the direction of travel A and being adjacent to the facing lateral ends of the after-treatment members.

Such a machine is known from Dutch patent application no. 7409032. The machine known from this document comprises a soil cultivating machine including therebehind two interspaced soil rollers. Upon application of this machine, the soil cultivated between the soil rollers remains unlevelled and, furthermore, there is created an earth wall between the soil rollers as a consequence of the sideward deposition of soil present in front of the after-treatment member and the upward deflection of the soil present at the facing lateral ends of the roller under the pressure thereof. Such earth walls are undesired from an optical point of view, but also in respect of the functioning of the seed coulters of a following sowing machine, and the crop emergence. For the purpose of reducing the effect of such an earth wall, the present machine comprises a soil displacing member extending, via projections of the arms of two adjacent soil rollers and via chain parts, to a considerable distance behind the machine. This may have the disadvantage that application of the machine, e.g. in combination with a sowing machine, entails a worse controllability of the guiding tractor, because the sowing machine is connected too far behind the soil cultivating machine and, consequently, too far behind the lifting hitch of the tractor.

According to the invention, an advantageous solution to this problem is obtained when the soil displacing member comprises a support, extending at least partially into the above-mentioned space between the after-treatment members and providing an essentially fixed operative position to the soil displacing member, which, seen in the direction of travel A, is disposed in the aforementioned space behind the soil cultivating members and in front of the rearmost circumference of the machine.

The construction according to the invention has the advantage that the soil displacing member, upon meeting with irregularities in the earth wall to be cultivated, does not bounce uncontrollably and, consequently, continues to function properly. Additionally, the solution according to the invention prevents the soil displacing member from coming into contact, by bouncing, with the connected sowing machine and from catching thereto, causing damage thereto, or breaking off.

For a better understanding of the present invention and to show how the same may be carried into effect, reference will now be made, by way of example, to the accompanying drawings, in which:
Figure 1 shows, in plan view, a machine according to the invention, in a position in which it is connected to the lifting hitch of a tractor;
Figure 2 is a cross-section of Figure 1, taken on the line II-II therein;
Figure 3 shows, in plan view, a central part of the machine represented in Figure 1;
Figure 4 shows, in a specific embodiment, a particular part of the machine;
Figure 5 shows, in front view, a particular part of a second embodiment of the machine;
Figure 6 is a side view according to the arrow VI in Figure 5, and
Figure 7 shows, in plan view, a third embodiment of the invention according to Figure 3.

In the drawings, corresponding parts have been indicated by the same reference numerals. Furthermore, the invention is by no means restricted to the embodiment shown and described here; it only serves to illustrate the inventive idea.

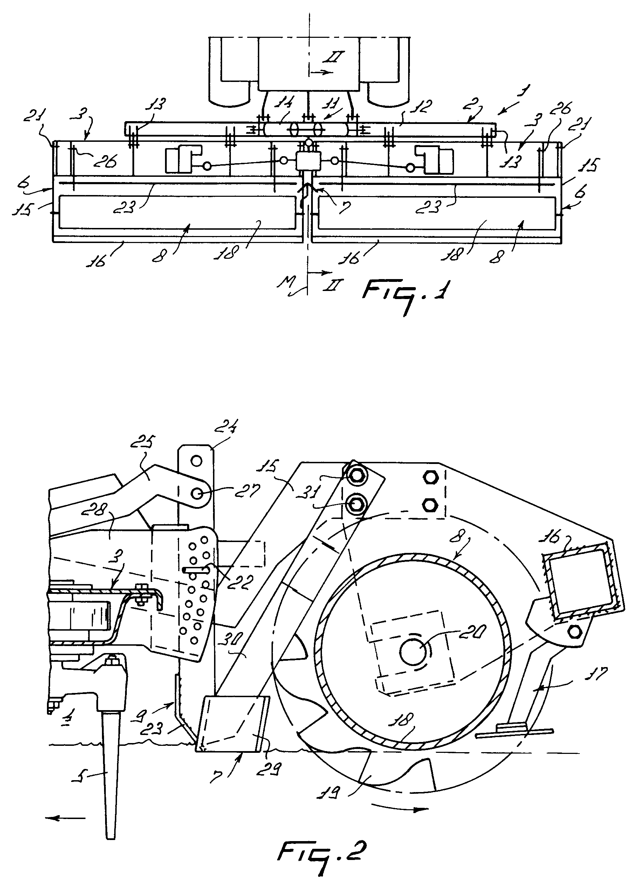

Figure 1 shows, in plan view, a soil cultivating machine, designed as a rotary harrow. The machine comprises a frame 1 consisting of a main frame 2 capable of being connected to a tractor, and two subframes 3 each connected thereto via a pair of parallellogram constructions 13, which subframes include soil cultivating members 4 provided with tines 5. In the present embodiment, these tines are rotatable about a shaft that extends vertically and is bearing-supported in the subframe 3. At the rear side of the cultivating members, there are attached to each subframe 3 two after-treatment members in the form of a soil roller 8 and a levelling member 9 situated in front thereof.

The main frame 2 comprises a central part 11 provided with coupling means for connecting the machine to the lifting hitch of a tractor. On both lateral sides, the central frame part 11 comprises a lateral main frame part 12 which, under activation of hydraulic operating members 14, is pivotable about (non-shown) pivot shafts orientated in the direction of travel into a substantially vertical transport position. Both subframes 3 are connected to the main frame 2 in such a way that in the centre of the machine, between the two facing lateral ends of the subframes 3, there is a free space which, in the present embodiment, is approximately 15 cm. In the centre of the main frame 2 there is provided a (non-shown) cultivating tine.

Via arms 15 extending in the direction of travel A, a soil roller 8 is pivotably connected to a subframe 3. For that purpose, near the front side of a subframe 3, the machine is provided with axle-arms 21 whereabout the arms 15 are pivotable. Near the rear side of a subframe 3, as is shown in Figure 2, there is disposed a plate part 28 extending vertically in the direction of travel A and provided with boreholes through which a pin 22 can be guided horizontally along the upper side of the arms 15 for the purpose of adjusting the working depth of the machine. A subframe 3 is freely supported near its rear side, via the adjusting pin 22 and the plate part 28, on the arms 15 for the soil roller 8. The soil roller 8 is designed as a so-called packer roller and comprises a cylindrical body 18 at whose circumference there are provided, wreath-wise, tines 19. Via a central axle-arm 20, extending beyond the inner lateral end of the roller 8, the latter is bearing-supported in a part of the arm 15 extending along the inner lateral end thereof. Between a projection of the arms 15 for a roller, extending rearwardly beyond the roller 8, there is provided a profiled beam 16 parallel to the soil roller 8. The latter beam serves to strengthen the roller construction and constitutes at the same time a carrier for scrapers 17, known per se, that are active between the aforementioned tines on the cylindrical roller part.

The levelling member 9 comprises a horizontally extending levelling bar 23 in the form of a bended plate part having a height of approximately 20 cm and extending along an imaginary line in the longitudinal direction of the beam 23. The plate part situated above the aforementioned bend extends substantially vertically and the part located therebelow extends approximately at an angle of 125° relative to the direction of travel A. To the plate part there are attached two vertical interspaced supports 24 provided with boreholes. Via a parallellogram construction having superposed arms 25, these supports 24 are connected with the subframe 3. For that purpose, the subframe 3 comprises near its front side superposed pivot shafts 26, and the arms 25 are connected with a support 24 via rearmost pivot shafts 27. Via the boreholes provided therein, a support 24 is adjustable in height relative to the parallellogram construction.

In the present embodiment, in the strip of space extending in the direction of travel A between the after-treatment members, i.e. the levelling member 9 and the soil roller 8, there is disposed a soil displacing member 7. This soil displacing member 7 comprises a soil shovelling member 29 and a supporting part 30 connected with the neighbouring arms 15 of one of the two soil rollers 8. In the present embodiment, the connection of the soil displacing member 7 includes a spring element which, according to Figures 1 to 3, is constituted by a pressure spring 32 provided about each of the two bolts 31 by means of which the support 30 of the soil displacing member 7 is attached, between the head of the bolt 31 and the support 30 which, consequently, is pushed against the arm 15.

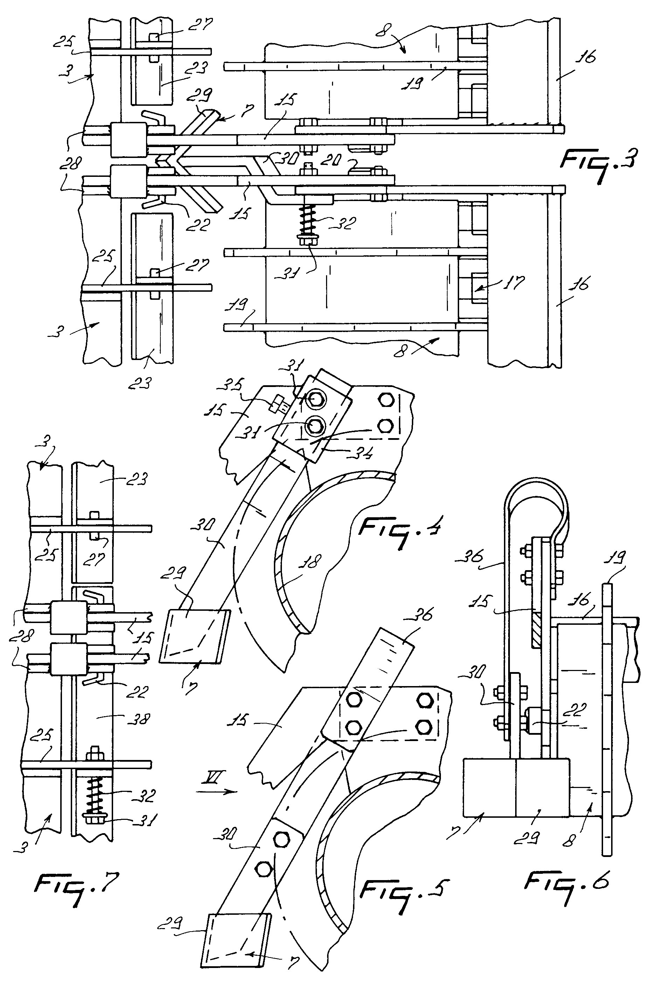

Figure 4 shows an embodiment in which the support 30 of the soil displacing member 7, near its fastening point, is guided through a drum-shaped holder 34 and in which the support 30 is fixable via an adjusting-screw 35. In a preferred embodiment, the drum 34 is attached to a part of the arm 15 via a lug-shaped projection, in the same manner as shown in Figure 3. In the embodiment shown, the bolts 31 are guided through the drum, and the support 30 is provided locally with (non-shown) slot holes. Of course, the adjustment in height of the soil displacing element 7 in the drum 34 may be effected otherwise, e.g. by using a pin in combination with a number of boreholes in the drum 34 and/or the support 30.

Figures 5 and 6 show an embodiment in which the fastening of the soil displacing member 7 comprises a strip-shaped spring element or leaf spring element 36, which, in this embodiment, constitutes part of the support 30. The spring element 36 comprises a substantially U-shaped bend and is attached by one leg of the U-shape to a part of an arm 15 and by an other leg thereof to the support 30. The base of the U-shaped bend forms the mirror-image of an imaginary vertical plane orientated in the direction of travel A.

Figure 7 shows an embodiment according to the invention, in which the space between two levelling members 9 is processed by a projection of preferably only one of the two levelling bars 23. Although not shown in the drawing, such an extension is preferably realized by an extension piece mounted on a standard levelling bar. In the present embodiment, the fastening of the levelling bar includes a spring construction according to Figure 3. In the embodiment shown, the rearmost pivot shafts 27 of the parallellogram arms 25 are constituted by bolts 31. In a non-shown embodiment, such a spring construction is included in the fastening of the mounted extension piece.

The function of the construction will be explained in what follows.

The machine shown in Figure 1 creates in a relatively simple manner a large working width by coupling two subframes 3 of a standard machine, via a main frame 2 interconnecting the subframes 3, the parallellogram constructions 13 and a central additional gear box attached to the main frame, from which the drive by the tractor is guided to the subframes 3 via a coupling shaft orientated transversely to the direction of travel. During operation, the subframes 3 and the cultivating members 4 included therein are subjected to very strong forces which, particularly when the machine meets with obstacles, such as stones, but also when it is moved along soil surfaces having a soil density that varies strongly from place to place, may result into sideward deflections of the subframes 3. In order to prevent the facing lateral ends of the subframes 3 from being damaged, these facing lateral ends are disposed in the machine at some distance from each other. The interjacent soil is cultivated effectively due to the operating reach of a tine 5 that amounts to approximately 15 cm therearound and by means of a fixed cultivating tine attached centrally in the interspace to the main frame. However, the subframe 3 may also extend over the entire width of the machine, possibly amounting to 6 metres, and the after-treatment members 8, 9 may be sub-divided, e.g. in two parts of each approximately or almost 3 metres; then, a good levelling over such large widths can better be realized by means of two levelling members 9 movable in height independently of each other, while it may also be too expensive to give a soil roller of such dimensions the required strength.

The disadvantage of after-treatment members 8, 9 divided over the machine width is for the levelling member 9 that, during operation, the earth wall created in front of the levelling bar 23, which wall is favourable for the levelling process, leaves soil behind near the ends thereof, and thus creates on the field ridges or walls of soil in the direction of travel A. This effect is reinforced by the soil roller 8 to be used for pressing a seedbed, the facing lateral ends of which roller causing the soil under pressure to deflect in upward direction so that there is also created a ridge of soil in the prepared seedbed. In particular in combination with the ridge or wall of soil already created by the levelling member, there is produced an effect that is not only undesired optically, but also in respect of the functioning of sowing machines to be applied on the seedbed. The soil displacing members 7 according to the invention level such ridges in a very effective and favourable manner: the member having a rigid construction and a working width at least corresponding to the distance between the faced facing lateral ends of the soil rollers included in the machine, there is obtained a distribution of the soil collected in an earth wall that is most acceptable both optically and functionally in respect of the sowing machine. This construction is favourable because of its position within the circumferential reach of the present machine. According to a possible embodiment, the soil displacing member 7 may be attached to the rear side of the soil rollers 8 near the carrier 16 against the arms 15. Also in this case, there is no impediment caused by the soil displacing member 7 when the present machine is combined with a sowing machine being active directly behind the soil rollers 8.

Preferably, the soil displacing member is adjustable in height, so that, when it is disposed in front of the roller 8, it may be active somewhat below the level of the cylindrical part 18 of the soil roller 8, and, when it is disposed behind the roller relative to the direction of travel A, it may be active somewhat above the level of the lower part of the cylindrical part 18 of the soil roller. In the case that the soil displacing member 7, seen in the direction of travel, is arranged between a levelling member 9 and a soil roller 8, the soil displaced is guided by the displacing member 7 in front of the roller 8.

The spring fastening of the displacing member has the advantage that, during operation, the soil displacing member 7 may undergo oscillating movements, which stimulates the soil distribution, and that the member 7, in case of obstacles such as stones, may deflect. Furthermore, this fastening method has the advantage for the present machine that, upon pivoting the subframes 3 into a vertical transport position, the soil displacing member 7 does not buckle immediately by a possible contact with the ground. This is neither the case when the machine is let down or gets down from the transport position on the ground. Although an outer wreath of tines 19 may be arranged at some distance from the inner lateral end of a soil roller 8, according to the invention it is preferable that the soil displacing member 29, seen in side view, does not overlap the imaginary circular circumference of the soil roller 8.

The invention is not restricted to the aforementioned description, but also relates to all the details of the drawings. The invention furthermore relates to all sorts of alternatives in the construction, of course, falling within the scope of the following claims.

## Claims

1. A soil cultivating machine for the preparation of a seedbed, provided with soil cultivating members (4) and an after-treatment member (8, 9), such as a levelling bar (8), a roller (9) or a combination thereof, arranged therebehind in the direction of travel A, which after-treatment member (8, 9) consists of at least two parts that, seen transversely to the direction of travel A, are arranged at some distance from each other, and which machine comprises a soil displacing member (7) which, during operation, is active in the soil part of the space between the imaginary vertical planes orientated vertically in the direction of travel A and being adjacent to the facing lateral ends of the after-treatment members (8, 9), characterized in that the soil displacing member (7) comprises a support (30), extending at least partially into the above-mentioned space between the after-treatment members (8, 9) and providing an essentially fixed operative position to the soil displacing member, and which soil displacing member (7), seen in the direction of travel A, is disposed in the aforementioned space behind the soil cultivating members (4) and in front of the rearmost circumference of the machine.

2. A soil cultivating machine as claimed in claim 1, characterized in that the after-treatment member (8, 9) is constituted by a soil roller (8), and the soil displacing member (7) is connected with an arm part (15) for the roller (8), which arm part (15) extends along the relative inner lateral end thereof.

3. A soil cultivating machine as claimed in claim 1 or 2, characterized in that the soil displacing member (7) is disposed in the direction of travel in front of the after-treatment member.

4. A soil cultivating machine as claimed in claim 1, 2 or 3, characterized in that the after-treatment member (8, 9) comprises a levelling bar (9) arranged between the roller (8) and the soil cultivating members (4), and the soil displacing member (7) is disposed, relative to the direction of travel A, between the levelling bar (9) and a soil roller (8).

5. A soil cultivating machine as claimed in any one of the preceding claims, characterized in that the soil displacing member (7) comprises a plate-shaped element (20) for the purpose of displacing soil and levelling the soil surface locally, which element, seen in plan view, is substantially U-shaped.

6. A soil cultivating machine as claimed in any one of the preceding claims, characterized in that the soil displacing member (7) is connected with the after-treatment member (8, 9) via a support (30) extending partially outside the imaginary circumference of an after-treatment member (8, 9).

7. A soil cultivating machine as claimed in any one of the preceding claims, characterized in that the soil displacing member (7), measured in the longitudinal direction of the after-treatment members (8, 9) extends at least to the facing lateral ends thereof.

8. A soil cultivating machine as claimed in any one of the preceding claims, characterized in that the fastening (34) of the soil displacing member (7) in the machine comprises adjusting means (35) for the purpose of the height-adjustability of the soil displacing member (7).

9. A soil cultivating machine as claimed in any one of the preceding claims, characterized in that the soil displacing member (7) is included in the machine in front of the rearmost circumference of the soil roller (8) to which the same is attached.

10. A soil cultivating machine as claimed in any one of the preceding claims, characterized in that the fastening of the soil displacing member (7) comprises a spring element (32, 36) via which element the soil displacing member (7) is movable in a lateral direction.

11. A soil cultivating machine as claimed in any one of the preceding claims, characterized in that the machine frame comprises two parts (3) connected to a main frame (2) that can be coupled to a tractor, which parts (3) are pivotable, relative to the main frame (2), about a pivot shaft orientated in the direction of travel A, into a substantially vertical transport position.

12. A soil cultivating machine as claimed in any one of the preceding claims, characterized in that the soil displacing member (7) comprises a soil displacing element (27) constituting part of the support (30).
